Europäisches Patentamt

European Patent Office

Office européen des brevets

(11) Publication number: **0 339 777**
**A1**

## EUROPEAN PATENT APPLICATION

(21) Application number: **89302447.1**

(22) Date of filing: **13.03.89**

(51) Int. Cl.⁴: **B23D 57/00 , B28D 1/08 , //B24B27/06**

The title of the invention has been amended (Guidelines for Examination in the EPO, A-III, 7.3).

(30) Priority: **11.03.88 GB 8805842**

(43) Date of publication of application:
**02.11.89 Bulletin 89/44**

(84) Designated Contracting States:
**BE DE ES FR GB IT NL SE**

(71) Applicant: **BRITISH AEROSPACE PUBLIC LIMITED COMPANY**
**11 Strand**
**London WC2N 5JT(GB)**

(72) Inventor: **Jones, Howard Laurence**
**34 Loompits Way**
**Saffron Walden Essex, CB11 4BZ(GB)**

(74) Representative: **Abrams, Michael John et al**
**Haseltine Lake & Co. 28, Southampton Buildings Chancery Lane**
**London WC2A 1AT(GB)**

(54) **Method and apparatus for cutting a solid block from one face of a workpiece.**

(57) The method comprises: (i) forming at least one hole (13, 14) (e.g. four holes at spaced points, said holes defining four edges of said block of material) in the face of the workpiece; (ii) sectioning the lateral periphery or sides (16, 17, 18) of said block, preferably by means of an abrasive wire (2) which is forced against the surface of the workpiece between a non-diagonal pair of said holes; (iii) sectioning the workpiece along the basal plane of said block by means of an abrasive wire (2); and (iv) removing said cut block from the workpiece.

Apparatus suitable for use in the above method is also disclosed and comprises an abrasive wire (2); a support system for said abrasive wire, the support system comprising a pair of pulleys (6); means (1, 5) for controlling the attitude of said pulleys; and means for driving said abrasive wire around a loop which includes said pulleys. Preferably, the abrasive wire is a diamond impreganated wire.

FIG. 1d.

## MACHINING OF WORKPIECES

This invention relates to the machining of workpieces and, more particularly, is concerned with the removal of material, e.g. metal, from one face of a solid workpiece to generate thereby a pocket within the workpiece.

Many machining operations such as milling and turning are extremely wasteful in material terms, since the resulting swarf has a scrap value which is only a small fraction of the initial material cost. For example, aluminium swarf has a value at least £300 per ton less than that of solid aluminium. For other metals and compositions, the differential can be even greater. Thus for aluminium/lithium alloys, the solid material has a value of around £1,200 per ton as solid scrap, whereas there is no value to swarf because of the difficulty in reprocessing this alloy.

It is known to use electrodischarge machining (EDM) to machine a solid rod out from a billet, thus providing both the rod and a tubular extension billet with minimal material loss. EDM is the controlled removal of material by means of melting or vaporisation by high frequency electrical sparks. The spark discharge is produced by pulsing of direct current between the workpiece and an electrode. The spark gap is typically flooded with a dielectric fluid which partially ionises, allowing the spark to cross the gap, and which also removes the vaporised material. The rate of removal of material is dependent upon the maximum linear rate of movement of the electrode, which is typically only 0.04 inch (1mm) per minute. Tool wear is also a problem, since the sparks not only wear away the workpiece, but also wear the electrodes, particularly at high material removal rates. Even the so-called 'no-wear' graphite electrodes suffer from gradual erosion. EDM is, therfore, an expensive process.

Electrochemical machining (ECM) is another technique for the controlled removal of metal from a workpiece. In ECM, the workpiece becomes an anode in an electrochemical cell in which an electrode is used as the cathode, and material is removed by anodic dissolution. Electrolyte is pumped through the gap between the tool (i.e. the cathode) and the workpiece while a direct current is passed through the cell at a low voltage. Rates of removal of material depend on the current flowing across the gap between workpiece and tool. Typically, 1 cubic inch ($16cm^3$) of metal can be removed per minute per 10,000 Amps current. The voltage across the electrodes is about 20volts, and therefore the power consumption of such a system is high. Although electrode wear is not a significant cost factor, the high tooling costs together with high operating costs make this an unattractive method for difficult machining operations.

We have set out to devise a method of removing material, e.g. metal or metal composite material, from one face of a solid workpiece (i.e. to form a blind hole or pocket in the workpiece) which does not suffer from the inherent disadvantages of these known methods. A further desirable feature would be to adopt a machining technique which results in relatively little material loss, and without penetrating through the workpiece as has hitherto been the case.

According to one aspect of the present invention, there is provided a method of cutting a solid block from one face of a workpiece, characterised by: (i) forming at least one hole in the face of the workpiece; (ii) sectioning the lateral periphery of said block by working from or within said hole; (iii) sectioning the workpiece along the basal plane of said block by means of an abrasive wire which is lowered into said hole or into a part of said lateral periphery of the block and is caused to traverse a path which defines the basal plane; and (iv) removing said cut block from the workpiece.

According to a second aspect of the present invention, there is provided a method of cutting a solid block from one face of a workpiece, characterised by: (i) forming a plurality of holes at spaced points on the face of the workpiece, said holes defining points on the lateral periphery of said block of material; (ii) sectioning the lateral periphery of said block by means of an abrasive wire which is forced against the surface of the workpiece between a non-diagonal pair of said holes; (iii) sectioning the workpiece along the basal plane of said block by means of an abrasive wire; and (iv) removing said cut block from the workpiece.

Advantageously, four holes are drilled into the face of said workpiece, the four holes corresponding to the desired edges of said block. Fewer or more holes may be formed as desired, depending for example on the preferred shape of block to be removed. In many cases, a parallelepipedic block, usually square or rectangular in section, will be the most convenient for removal.

The lateral periphery of the block (e.g. the four lateral faces of a cube) may be cut by a suitable technique working from the initial 'pilot' hole or holes. A blade-type cutting technique may be used, e.g. a chain saw or the like. It is preferred, however, to use an abrasive wire to cut the lateral periphery as well as the the basal plane of the block. Where a single pilot hole is drilled into the face of the workpiece, an abrasive wire may be lowered into the hole so as to work against the sides of the hole in order to cut out the lateral periphery of the block; this may be formed so as to have straight sections and/or curved sections defining its lateral periphery.

The abrasive wire as used in the methods of this invention may be driven continuously in one direction around a loop, or it may be caused to reciprocate, in order to generate the required cutting action. Continuous movement around a closed loop is preferred because it permits higher linear speeds and hence more rapid cutting rates to be achieved.

According to a third aspect of the present invention, there is provided a method of cutting a solid block from one face of a workpiece, characterised by: (i) forming four holes at spaced points on the face of the workpiece, said holes defining four edges of said block of material; (ii) sectioning the sides of said block in succession by means of an abrasive wire which is forced against the surface of the workpiece between a non-diagonal pair of said holes; (iii) sectioning the workpiece along the basal plane of said block by means of an abrasive wire; and (vi) removing said cut block from the workpiece.

Preferably, the abrasive wire is supported between pulleys. Advantageously, the pulleys themselves can be controlled so as to be rotatable about an axis substantially normal to the face of the workpiece. Preferably, the pulleys are supported on a rigid support mechanism which permits controlled swivelling of the pulleys.

According to a fourth aspect of the present invention, there is provided a method of cutting a solid block from one face of a workpiece, characterised by: (i) forming four holes at spaced points on the face of the workpiece, said holes defining four edges of said block of material; (ii) positioning against a non-diagonal pair of said holes an abrasive wire supported between a pair of pulleys; (iii) causing relative movement between said abrasive wire and the face of the workpiece while urging said pulleys downwardly into said pair of holes or while holding said pulleys at the bottom of said holes, whereby a first section defining one face of said block is cut into the workpiece between said pair of holes; (iv) cutting three further sections in a similar manner between other non-diagonal pairs of holes so as to define thereby all four faces of said block; (v) sectioning the base of said block of material by (a) lowering said pulleys with the abrasive wire between them down to the base of the block along one of the sectioned faces of the block, (b) positioning the abrasive wire along three of the four edges of the base of said block, and (c) causing relative movement between the abrasive wire and the workpiece while applying tension to the wire so as to reduce the length paid out between the two pulleys; and (vi) removing said cut block from the workpiece.

In cutting the basal plane of said block, the abrasive wire may be positioned around three of the four edges of tne base of the block by manually looping the wire and emplacing it while the pulleys are positioned at the bottom of two adjacent holes. Alternatively, where the sides cut around the block present a sufficient gap, the abrasive wire may be positioned by moving said pulleys at the basal level towards the opposite face of said block while allowing an increased length of abrasive wire to be paid out between said pulleys, whereby said abrasive wire extends along three of the four edges of the base of said block.

In cutting the sides of the block by the method defined above, the abrasive wire may be paid out sufficiently at the start of a cutting operation to allow the two pulleys to be positioned at the bottom of the pair of holes. The abrasive wire is then driven, while tension is applied to reduce the length paid out between the pulleys. Alternatively, a fixed or approximately fixed length of wire may be used, and the pulleys urged downwardly into said holes to give the desired sectioning.

The invention also provides apparatus for cutting a block of solid material from one face of a workpiece, which apparatus comprises an abrasive wire; a support system for said abrasive wire, the support system comprising a pair of pulleys; means for controlling the attitude of said pulleys; and means for driving said abrasive wire around a loop which includes said pulleys.

The abrasive wire is advantageously a so-called diamond wire - that is, a wire (typically steel wire) carrying blocks or chips of diamond as the abrasive material. Other types of abrasive wire e.g. wire carrying silicon carbide or tungsten carbide or other very hard material as the cutting agent - may be used.

Diamond wire has been used for machining a number of materials from the small scale of component manufacture using wire 1/2mm diameter to the extraction of marble blocks from quarries with 12mm diameter diamond coated beads.

The pulleys in an apparatus in accordance with this invention are preferably arranged so that they can swivel in one plane, whereby the direction of the abrasive wire leaving the pulleys can sweep along a plane.

The particles or blocks of abrasive material (e.g. polycrystalline diamond) carried by the abrasive wire may be disposed randomly or systematically along the length of the wire. The particles or blocks may be spaced apart (this assists in preventing clogging of the wire). In addition, shaped blocks of abrasive material may advantageously be used - in one embodiment, these are blocks of polycrystalline diamond arranged to present to the material of the workpiece a negative rake angle. The cutting may be carried out dry, or with a liquid which assists in cooling the workpiece and preventing clogging. Additionally, an abrasive slurry may be injected into the region where cutting is taking place. For example, a slurry of silicon carbide particles in an aqueous carrier may be used. Cleaning of the wire may be assisted, during a cutting operation, by directing a powerful water jet at the wire as it emerges from the surface of the workpiece.

Preferably, the abrasive wire is sufficiently thin to allow it to pass around a relatively small pulley wheel. i.e. one of 1-2 inches (2.5-5cm) diameter.

The initial drilling of one or more holes in the face of the workpiece may be carried out by any convenient technique.

With the method of this invention, material is removed as a solid block rather than as low grade swarf, thus not only increasing the value of the removed material but also making it (at least in some cases) available for use in fabricating other, smaller components.

One particular application of the present invention is in the fabrication of aircraft wing spar sections which are formed with pockets in them rather than holes. The technique originally used for fabricating wing spars involved sticking stringers onto a wing skin; this has now been superseded by milling out the material from a thick plate, leaving the stringers proud of the eventual skin. For the fabrication of such an article by a method in accordance with the present invention, the material which is to be removed is extracted as a solid block by cutting around the periphery of the pocket using the machining techniques outlined above. These are able to cut beneath a block of material while the material is still in situ.

For a better understanding of the invention, and to show how the same may be carried into effect, reference will now be made, by way of example, to the accompanying drawings, in which:

Figures 1a - 1f illustrate a preferred technique in accordance with this invention;

Figure 2 illustrates a vertical section through one embodiment of cutting apparatus in accordance with this invention;

Figure 3 is a schematic plan view of part of the apparatus seen in Figure 2;

Figure 4 is a schematic section along the lines IV-IV of Figure 2; and

Figure 5 is a schematic sectionalong the lines V-V of Figure 2.

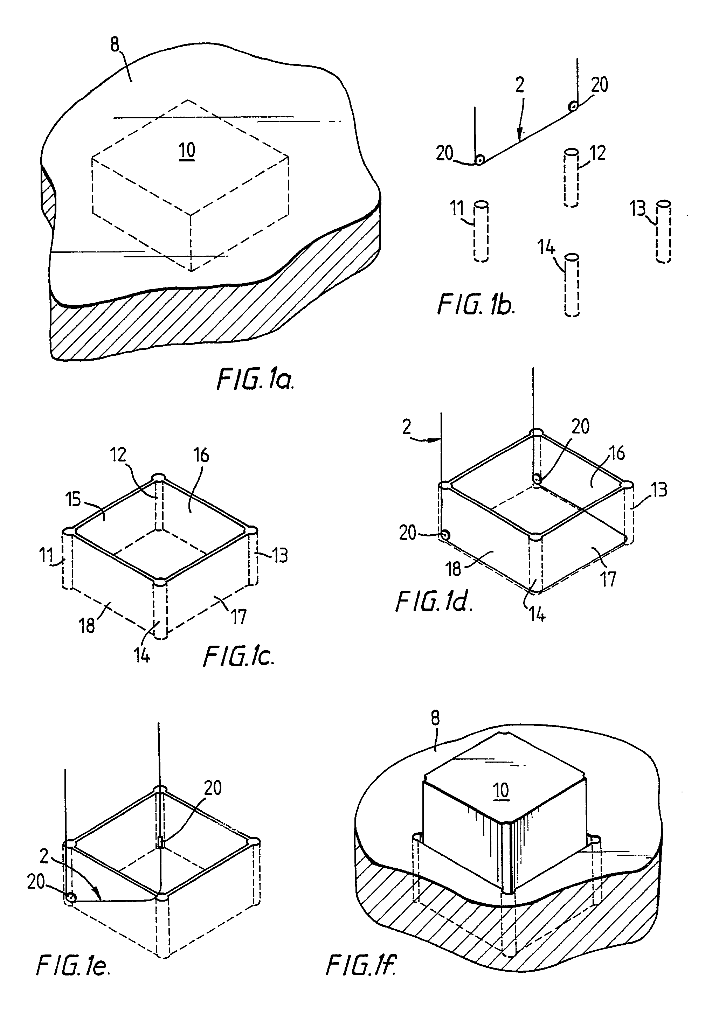

Referring now to Figure 1 of the drawings, a method for removing pockets of metal (e.g. aluminium) from an aircraft wing spar member will be described. Figure 1a shows the metal workpiece (i.e. the wing spar) 8 with, in dashed lines, the block 10 of material which is to be cut out. First of all, four holes 11, 12, 13 and 14 (see Fig. 1b) are drilled at each corner of the block 10, each hole being large enough to take a diamond wire pulley 20. Next, cuts are made successively along the four sides 15, 16, 17 and 18 of block 10 by means of an abrasive wire 2, e.g. diamond wire, carried between pulleys 20. These sides will generally be substantially vertical, although this is not essential. Similarly, the technique described here is applicable to other geometric shapes apart from cubes or cuboids. The pulleys 20 with wire 2 are firstly lowered down holes 11 and 12 while the wire 2 is moved in a closed loop which includes the pulleys 20 as part of its course. The cutting action of the abrasive wire, while the pulleys are located at the bottom of holes 11 and 12, is generated by reducing the length of wire paid out between the pulleys. This results in a vertical section 15 being cut. The same procedure is repeated to cut sides 16, 17 and 18.

Next, the pulleys 20 carrying wire 2 are lowered down holes 13 and 14 and the pulleys are then caused to swivel about the axes of these holes, and the wire 2 is manually looped around the base of the block along the lower limits of sides 16, 17 and 18; this condition is illustrated in Figure 1d. Then, with the pulley axes horizontal, the abrasive wire 2 which is threaded around the base of the three sections 16, 17 and 18 is tensioned while it is moved around a loop, thereby cutting away the base of block 10 (see Figure 1e). During tensioning of wire 2, the pulleys 20 are allowed to swivel as the wire cuts the base of the block. Lastly, as shown in Figure 1f, the cut block 10 is removed from the wing spar member 8.

It will be appreciated that the technique described above results in very little swarf generation. Only the material removed during formation of holes 11 -14 is lost as swarf.

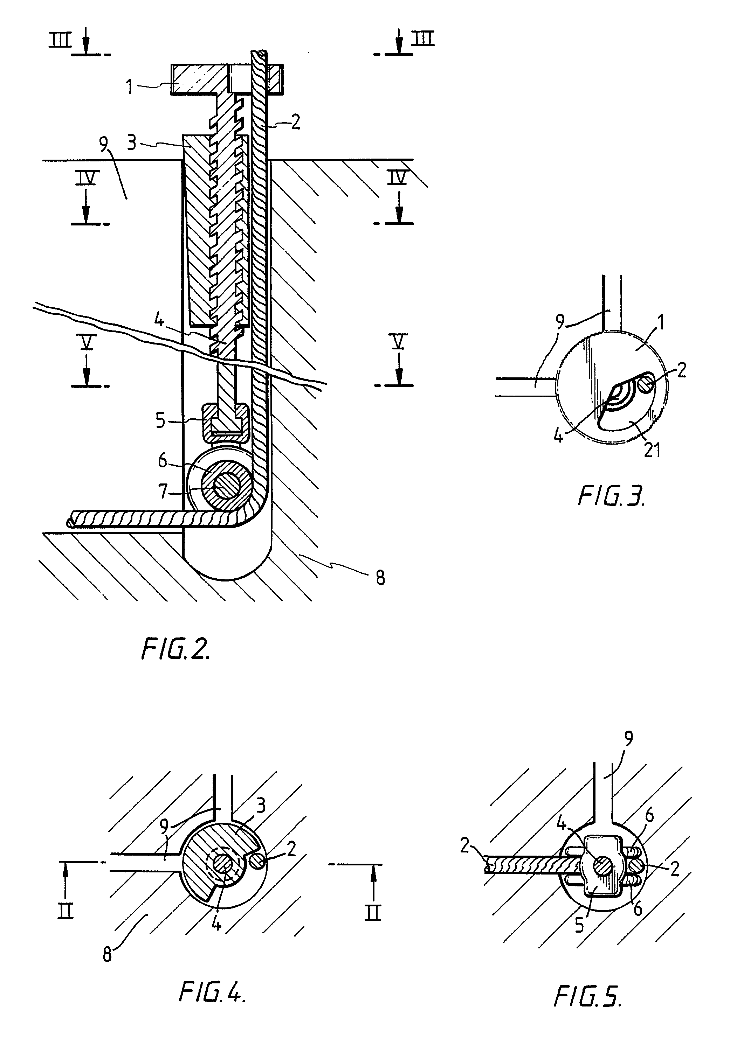

Referring now to Figures 2 to 5, one embodiment of apparatus in accordance with this invention is illustrated. The apparatus comprises an abrasive wire 2 which passes around a pair of pulleys 6 of which one is shown in these Figures. Pulley 6 is supported on an axle 7 which is carried by a swivel unit 5. A threaded rod 4 passes through a tapered shank 3 and terminates in a thumbwheel 1. Thumbwheel 1 includes a slot 21 through which the wire 2 passes. Rotation of thumbwheel 1 causes rotation of swivel 5 and hence of the pulley 6 and axle 7. Means (not shown) is provided for driving the wire 2 so as to perform a cutting action such as described above with reference to Figure 1.

The method and apparatus of the present invention facilitate the formation of relatively large articles, e.g. aircraft wing spars, with minimal waste. The solid blocks cut in forming pockets within the spars may find uses at other stages in the production process and will generally have a much higher value than conventional swarf. Furthermore, the techniques of this invention may assist in allowing the use of more exotic materials, for example aluminium/lithium alloys and metal matrix composites, for industrial purposes.

## Claims

1. A method of cutting a solid block from one face of a workpiece, characterised by: (i) forming at least one hole in the face of the workpiece; (ii) sectioning the lateral periphery of said block by working from or within said hole; (iii) sectioning the workpiece along the basal plane of said block by means of an abrasive wire which is lowered into said hole or into a part of said lateral periphery of the block and is caused to traverse a path which defines the basal plane; and (iv) removing said cut block from the workpiece.

2. A method of cutting a solid block from one face of a workpiece, characterised by: (i) forming a plurality of holes at spaced points on the face of the workpiece, said holes defining points on the lateral periphery of said block of material; (ii) sectioning the lateral periphery of said block by means of an abrasive wire which is forced against the surface of the workpiece between a non-diagonal pair of said holes; (iii) sectioning the workpiece along the basal plane of said block by means of an abrasive wire; and (iv) removing said cut block from the workpiece.

3. A method as claimed in claim 1 or 2, characterised in that four holes are drilled into the face of said workpiece, the four holes corresponding to the desired edges of said block.

4. A method as claimed in claim 1, 2 or 3, characterised in that said abrasive wire is passed around a pair of pulleys which are pressed against the part of the wotkpiece which is to be cut.

5. A method as claimed in claim 4, characterised in that said pulleys are supported on a rigid support mechanism which permits controlled swivelling of the pulleys.

6. A method of cutting a solid block from one face of a workpiece, characterised by: (i) forming four holes at spaced points on the face of the workpiece, said holes defining four edges of said block of material; (ii) positioning against a non-diagonal pair of said holes an abrasive wire supported between a pair of pulleys; (iii) causing relative movement between said abrasive wire and the face of the workpiece while urging said pulleys downwardly into said pair of holes or while holding said pulleys at the bottom of said holes, whereby a first section defining one face of said block is cut into the workpiece between said pair of holes; (iv) cutting three further sections in a similar manner between other non-diagonal pairs of holes so as to define thereby all four faces of said block; (v) sectioning the base of said block of material by (a) lowering said pulleys with the abrasive wire between them down to the base of the block along one of the sectioned faces of the block, (b) positioning the abrasive wire along three of the four edges of the base of said block, and (c) causing relative movement between the abrasive wire and the workpiece while applying tension to the wire so as to reduce the length paid out between the two pulleys; and (vi) removing said cut block from the workpiece.

7. A method as claimed in any preceding claim, characterised in that a liquid is caused to flow the cutting zone during operation of said abrasive wire.

8. A method as claimed in claim 7, characterised in that said liquid is an abrasive slurry.

9. Apparatus for cutting a block of solid material from one face of a workpiece, characterised in that said apparatus comprises an abrasive wire; a support system for said abrasive wire, the support system comprising a pair of pulleys; means for controlling the attitude of said pulleys; and means for driving said abrasive wire around a loop which includes said pulleys.

10. Apparatus as claimed in claim 9, wherein said support system for the pulleys comprises an axle carried by a swivel unit.

11. Apparatus as claimed in claim 10, characterised in that said rod is screwthreadedly attached to a tapered shank.

12. Apparatus as claimed in claim 10 or 11, characterised in that said swivel unit is attached to a rod which terminates in a thumbwheel.

13. Apparatus as claimed in claim 12, characterised in that said thumbwheel is formed with a slot which serves as a guide for the abrasive wire.

FIG. 1a.

FIG. 1b.

FIG.1c.

FIG. 1d.

FIG. 1e.

FIG.1f.

EP 0 339 777 A1

FIG.2.

FIG.3.

FIG.4.

FIG.5.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A- 834 921 (BILLY ET THOMAS) <br> * Whole document * <br> --- | 1-10 | B 23 D 57/00 <br> B 28 D 1/08 // <br> B 24 B 27/06 |
| X | FR-A-1 181 703 (M. MARCHETTI) <br> * Whole document * | 1,7-10, 12 | |
| A | --- | 11,13 | |
| X | ANNALES DES MINES DE BELGIQUE, no. 9, September 1982, pages 809-813, Brussels, BE; B. THOREAU: "Utilisation du câble diamanté en carrière" <br> * Page 810 * <br> --- | 1,7-9 | |
| X | US-A-3 220 149 (R. DIOGUARDI) <br> * Column 2, lines 54-60; column 5, lines 58-69; figures 1,3,4,7 * | 9,10 | |
| A | | 7,8 | |
| A | --- <br> DE-C- 146 972 (C. BLANCHARD) <br> * Claim; figures 1-6 * <br> ----- | 9-13 | |

TECHNICAL FIELDS SEARCHED (Int. Cl.4)

B 23 D
B 28 D
E 21 C

The present search report has been drawn up for all claims

| Place of search | Date of completion of the search | Examiner |
|---|---|---|
| THE HAGUE | 12-06-1989 | MOET H.J.K. |

EPO FORM 1503 03.82 (P0401)